# EUROPEAN PATENT SPECIFICATION

(11) **EP 1 255 343 B1**
(45) Date of publication and mention of the grant of the patent: **24.04.2013**
(21) Application number: 02009198.9
(22) Date of filing: 25.04.2002
(51) Int. Cl.: H02K 1/27, H02K 7/10

(54) **Permanent magnet electric machine**
Elektrische Machine mit Dauermagneten
Machine électrique à aimants permanents

(30) Priority: 04.05.2001 EP 01810440
(43) Date of publication of application: 06.11.2002
(73) Proprietor: Inventio AG, 6052 Hergiswil NW (CH)
(72) Inventor: Almada, Enrique, 6012 Obernau (CH)

(56) References cited:
- EP-A- 0 871 277
- EP-A- 1 017 152
- US-A- 5 760 503
- US-A- 6 075 306
- PATENT ABSTRACTS OF JAPAN vol. 1997, no. 04, 30 April 1997 (1997-04-30) & JP 08 331782 A (MEIDENSHA CORP), 13 December 1996 (1996-12-13)
- PATENT ABSTRACTS OF JAPAN vol. 1999, no. 14, 22 December 1999 (1999-12-22) & JP 11 252835 A (SANYO DENKI CO LTD), 17 September 1999 (1999-09-17)

## Description

The present invention relates to a permanent magnet electric machine, specially for elevator or lift installations, as defined in the preamble of claim **1.**

US Pat. No. 5,898,990 to Henry discloses a method for assembling one or more unitary permanent magnet rings on a rotor body for an electric motor or generator when the rotor has a greater coefficient of thermal expansion than the rings. This method includes the steps of forming grooves in the cylindrical surface of the rotor, applying a curable adhesive on said surface and placing said unitary permanent magnet rings over the adhesive bearing cylindrical surface. This unitary magnet rings have a magnetic orientation in the radial direction.

US Pat No. 5,998,902 to Sleder, Sr. et al. is related to a magnet rotor assembly comprising a plurality of permanent magnets embedded within a nonmagnetic ring and having several locking protrusions which can be caused to elastically deflect in a radially inward direction. When the locking protrusions rebound elastically into a groove, the ring is locked permanently into a rotatable component and cannot be removed without deforming and seriously damaging the ring. The locking protrusions can extend circumferencially around the outer periphery of the ring. US Pat. No. 4,877,986 to Shimizu relates to a rotor of a magnetic generator comprising a plurality of magnets, disposed on an inner surface of a peripheral wall of a flywheel at intervals of a predetermined angle, and having a magnet-holding cylinder with an outward flange and a plurality of outward protrusions, wherein said magnets are positioned thereby to be parallel to the axis of said magnet-holding cylinder.

According to patent publication DE 195 01 745 A1**,** a rotor of a motor or generator may be made up of a number of metal laminations clamped and glued together and having slots between teeth, in which the magnets are located. The metal lamination sheets have holes to accurately center the pile of sheets.

Further rotor constructions are shown and described in JP 08331782 and EP 1017152**.**

The conventional construction of the motors of this type consists of fixing the magnets either directly on the surface of a rotor frame or on a lamination sheet package.

One drawback of the motors according to the state of the art, is that the configuration of the magnet holding bodies is quite complicated, and that special machine tools are required to install said magnets, which will increase the cost of production.

Therefore, the object of the present invention is to provide an improved electric machine, preferable a synchronous machine or motor, used for elevators or lift installations,

The motor of the invention is characterized by what is said in the characterization part of claim **1**.

A method for disassembling the inductor of the electric machine of claim 1 is defined in claim 8.

Other embodiments of the invention are characterized by the features presented in the other claims.

One of the advantages of the motor according to the invention, is that the rotor of said machine can be easily and quickly installed and/or removed in very small spaces, specially of elevator or lift installations.

Other characteristics and advantages of the present invention will become apparent on reading the description made hereafter with reference to the accompanying drawings, given solely by way of example, wherein:
**FIG. 2** is a perspective view of an exemplary rotor comprising four steel rings with permanent magnets according to a preferred embodiment of the invention,
**FIG. 3** is a perspective view illustrating the assembled stator and rotor, and
**FIG. 4** is a schematic illustration of a preferred embodiment of a machine according to the present invention.

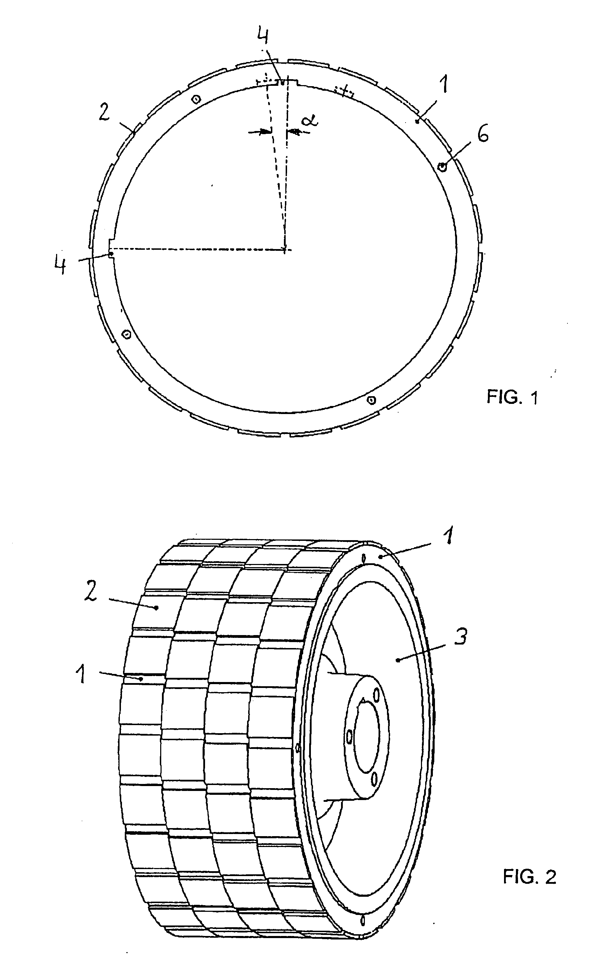

As seen in **FIG. 1** and **2****,** the rotor according to a preferred embodiment of the invention comprises four steel rings **1** with permanent magnets **2** fixed on their outer surfaces. In **FIG. 2****,** an assembled rotor system can clearly be seen which includes four steel rings having a inner side and a rotor frame **3** having an outer side. However, the rotor may also be composed by two or more rings **1** with magnets **2.** The rings **1** are made up of steel or another suitable ferromagnetic material and have the same diameter. The inner side of the rings **1** is mounted on the outer side of the rotor frame **3.** The inner sides of the rings **1** have at least one slot **4** which serves as an alignment means and to fix the rings on the rotor **3** e. g. with the help of locking means as gussets, plates or brackets. The same or similar rings can be employed for motors of different iron lengths, defining standard iron lengths as multiple values of the ring length.

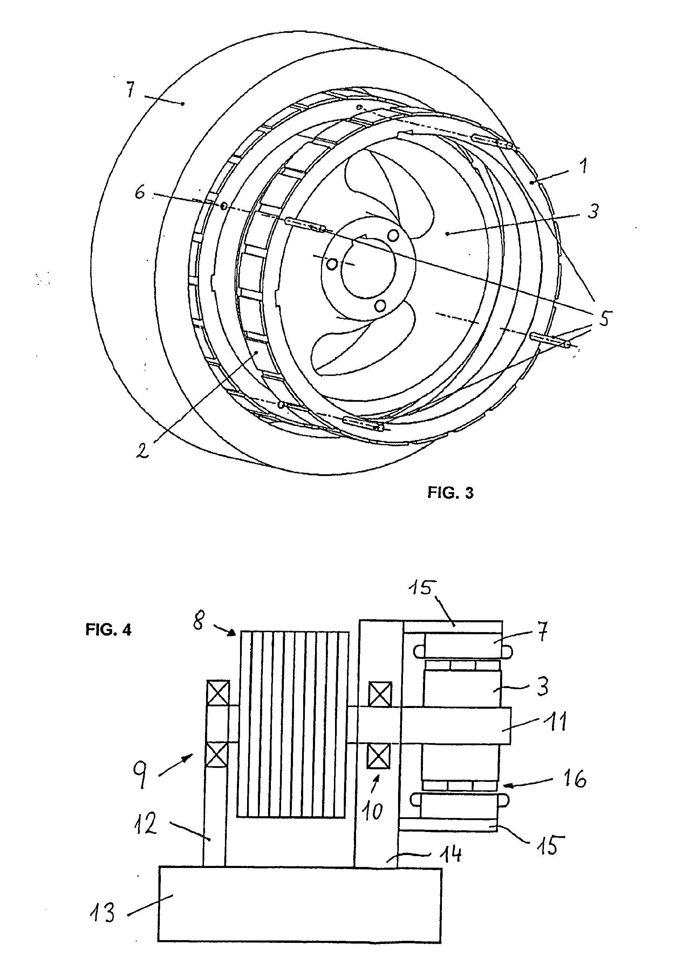

As illustrated in **FIG. 3**, the magnet rings **1** can be removed by the use of threaded ties **5** which can be inserted into respective holes **6** with which the magnet rings **1** are provided. In this case the ties **5** are very simple tools for the successive removal of the rings **1** in cooperation with said holes **6.** It is also possible to use said ties **5** to reinforce the fixation of the rings together in the axial direction. This is possible but not absolutely necessary because said fixation is achieved by the slot **4** and said gussets, plates brackets or the like which are very efficient to resist specially tangential forces.

According to **FIG. 1** the rings **1** may be delayed by an arbitrary magnet shifting angle α. This permits the generation of a skewing effect of the magnets which reduces or eliminates the cogging torque of the motor. If the magnets of two adjacent rings are positioned in the same overlapping manner as depicted in **FIG. 1****,** the slot of the second ring is shifted with said angle α relative to the slot **4** of the first ring in front. However, by assembling the rings the first ring must be revolved around the center of the axis, i. e. shifted counterclockwise with said angle α in order to have the slots of both rings in a straight line, so that said fixing or locking means can be introduced into all slots **4** of said rings **1**. As a result, the slots of the rotor unity will be located in an overlapping manner (**FIG. 2**) and the magnets will be delayed by said angle **α,** preferable in the range of **0 < α < 3°.**

**FIG. 3** shows a motor having an air gap between the magnets **2** of the rotor and a stator **7**. Naturally, the stator **7** includes a stator coil. In a preferred embodiment of the invention, the circular rim or border of the steel ring **1** exhibits a sufficient large thickness to receive the long holes **6** for the threaded ties **5** or other removing elements or tools. The holes **6** are parallel to the axis of rotation of the ring **1**, i.e. perpendicular to the small flat side of the border of the ring **1.**

The system according to **FIG. 4** includes a driving wheel **8,** preferably intended to coil up a rope of an elevator or a lift installation. Said driving wheel **8** is located between two bearings **9** and **10** for an axle **11** of the rotor, and the frame **3** is fixed to said axle **11**. The bearing **9** may be attached to a support **12** fixed to a base **13** located in the machine room of said elevator or lift installation. The system may include a stator frame **14** supporting the bearing **10** and, with the help of connection means **15**, also the stator **7**. As seen in **FIG. 4** the frame **3** and the stator **7** may be mounted out from the bearing **10** of the rotor. This unilateral embodiment having the frame **3** exterior to the bearing **10** facilitates the easily and quickly installation of two or more rings with permanent magnets, e. g. three rings **16** as shown in **FIG. 4**.

A method for mounting a permanent magnet electric machine comprising an armature **7** and an inductor or rotor with rings **1** or **16** having said magnets **2,** may comprise the following method steps:
mounting the stator **7** on the stator frame **14** over connection means **15**,
mounting the rotor frame **3** on the axle **11** of the rotor,
mounting a first ring **1** on said inductor frame **3,** mounting a second ring **1** on said inductor frame **3,** fixing said second ring **1** laterally on said first ring **1** with the magnets of the same polarity in a predetermined alignment with the help of said alignment means **4** and locking means and mounting successively in this way all rings **1** of the inductor. For this purpose, it is also possible but not absolutely necessary to have several slots in each ring, e.g. **n - 1** slots for a number **n** of rings. For convenience, the stator and/or the rotor may be provided with shoulders for supporting the ends of a very simple tool, preferably in the form of a jack, lifting jack, screwing jack, etc., for facilitate the introduction of the rings into the frame **3**.

This method of assembling the rotor is not ascertainable from the finished motor, which should be dismantled in order to see how the rotor was assembled.

One advantage of this method of construction is that during the phase of mounting the magnets **2,** it is easier to assemble small magnets on the surface of a steel ring **1** that big magnets on the surface of a rotor. It is also easier to handle single magnet rings **1** that an entire rotor. In addition to this, the rings can be produced separately, and they can be obtained e. g. from standard iron tubes.

Another advantage of the method according to the invention results of the fact that, for robustness reasons, it would be convenient that the length of the magnets do not exceed certain dimensions, typically **50** mm, because otherwise they become fragile. The magnet plates must not necessarily be curved. According to the invention it is no need of sticking two or more magnets of the same polarity close next to each other, as in the normal construction, what is a complex operation due to the forces between the magnets. Special tools for this purpose can be avoided. The magnetic elements may be flat elements, e.g. rare earth permanent magnets, such as neodymium-iron-boron (**NdFeB**), cobalt, samarium or cheap hard permanent ferrite magnets disposed with alternating magnetic polarities. Preferably, the rings **1** are formed from a soft magnetic material such as mild steel, preferably having a relative high permeability µᵣ **>> 1.** The magnets may be glued to the rings.

Another advantage of this method relates the steps of disassembling the motor. Specially for large machines located in very small spaces, when it is necessary to remove the rotor in case of failure of the stator **7** without transporting the motor, for example in large lift installations, the rings can be removed successively one at a time by inserting the threaded ties **5** into the respective holes **6**. For convenience, said holes **6** may also be shifted in the different rings **1**. Once the rings are outside, the frame of the rotor can be easily removed because there are no magnetic forces between rotor an stator, and special devices to guide the rotor out of the stator, as foreseen for conventional constructions, are not needed.

Another advantage of this method is that the undesirable parasite cogging torque or ripple torque can be avoided or compensated. This effect arises from the interaction between the magnets and the teeth of the stator, which are normally straight. According to the invention, the feature of separating the magnets in several straight pieces allows obtaining a skewing effect by shifting the rings with the angle α in order to compensate said parasite torque.

The described type of motor is of the interior-rotor machine type because the magnets **2** are fixed on the outer surface of the rings **1**. According to another embodiment of the invention, the magnets can be fixed on the inner surface of the rings to give an exterior-rotor machine type. In this case, the stator stay inside. More generally speaking, the rotor with the magnets may be an inductor and the stator with the coils may be an armature. Normally the armature (stator) is fixed to a bedplate and does not move. However, there are types of machines, in which the inductor (rotor) does not move and the armature is mounted on axles as to revolve inside or outside of the inductor. The rotor may be designed for a speed of 30 to 900 rpm.

## Claims

1. A permanent magnet electric machine comprising an armature (**7**) and an inductor (**1**, **2**),
wherein the inductor comprises at least two rings (**1**) with permanent magnets (**2**) fixed on their outer surfaces,
wherein said rings (**1**) are removably mounted axially next to each other on or constitute a removable part of an inductor frame (**3**)
and wherein the inner sides of said rings (**1**) have at least one slot (**4**) to align and fix the rings (**1**) on the inductor frame (**3**) in order to obtain an inductor unity
**characterized in that** at least two magnet rings (**1**) are provided with axial holes (**6**) on their circular rims enabling during disassembly successive removal of the rings (**1**) by use of corresponding threaded ties (**5**) insertable in said holes (6)

2. The machine according to claim **1**, wherein said rings (**1**) are mounted on said inductor frame (**3**) in such a manner that the inner side of the rings (**1**) is fixed on the outer side of the inductor frame (**3**), and wherein said magnets are fixed on the outer surface of the rings.

3. The machine according to claim **1** or **2**, wherein the inner side of each ring (**1**) has at least one slot (**4**) which serves to fix the rings on the inductor frame (**3**) by means of fixation or locking elements.

4. The machine according to one of the claims **1** to **3**, wherein the same or similar rings are employed for motors of different inductor lengths, defining standard inductor lengths in function of multiple values of the ring length.

5. The machine according to one of the claims **1** to **4**, wherein the rings (1) are shifted with a suitable magnet shifting angle (α) to permit the generation of a skewing effect of the magnets which reduces or eliminates a cogging torque of the motor.

6. The machine according to one of the claims **1** to **5**, wherein the magnets (2) are shaped in form of plates of **10** to **100** cm² , preferably curved according to the inside radius of the armature (**7**).

7. Rotor for a machine according to one of the claims **1** to **6**, wherein said inductor is a rotor having at least two rings (**1**) with permanent magnets (**2**) fixed on their working surfaces, for applications in elevator or lift installations,
wherein said rings (**1**) are removably mounted on or constitute a removable part of a rotor frame (**3**),
wherein said rings (**1**) are laterally fastened together by fastening means (**4**) in order to obtain a rotor unity, and
wherein preferably said machine is a synchronous motor.

8. A method for disassembling the inductor or rotor of a permanent magnet electric machine, comprising an armature (**7**) and an inductor or rotor (**1**, **2**) having rings (**1**) with fixed permanent magnets (**2**) according to any one of the previous claims, comprising the following method steps:
removing the rings (**1**) successively one at a time by inserting threaded ties (**5**) into respective axial holes (**6**) provided on circular rims of the rings (**1**), and removing the frame (**3**) of the inductor or rotor, once the rings (**1**) are outside.

## Patentansprüche

1. Elektrische Maschine mit Dauermagneten, die einen Läufer (7) und eine Induktionsspule (1, 2) umfasst,
wobei die Induktionsspule mindestens zwei Ringe (1) umfasst, an deren Außenflächen Dauermagnete (2) befestigt sind,
wobei die Ringe (1) abnehmbar axial nebeneinander an einem Induktionsspulenrahmen (3) montiert sind oder einen abnehmbaren Teil eines Induktionsspulenrahmens (3) bilden,
und wobei die Innenseiten der Ringe (1) mindestens einen Schlitz (4) aufweisen, um die Ringe (1) an dem Induktionsspulenrahmen (3) auszurichten und zu befestigen, um eine Induktionsspuleneinheit zu erhalten, **dadurch gekennzeichnet, dass** mindestens zwei Magnetringe (1) mit axialen Löchern (6) an ihren Kreisrändern versehen sind, was während der Demontage ein sukzessives Abnehmen der Ringe (1) mit Hilfe entsprechender Gewindezuganker (5), die in die Löcher (6) eingesetzt werden können, ermöglicht.

2. Maschine nach Anspruch 1, wobei die Ringe (1) in einer solchen Weise an dem Induktionsspulenrahmen (3) montiert sind, dass die Innenseite der Ringe (1) an der Außenseite des Induktionsspulenrahmens (3) befestigt ist, und wobei die Magnete an der Außenfläche der Ringe befestigt sind.

3. Maschine nach Anspruch 1 oder 2, wobei die Innenseite jedes Rings (1) mindestens einen Schlitz (4) aufweist, der dazu dient, die Ringe mit Hilfe von Befestigungs- oder Verriegelungselementen an dem Induktionsspulenrahmen (3) zu befestigen.

4. Maschine nach einem der Ansprüche 1 bis 3, wobei die gleichen oder ähnliche Ringe für Motoren mit verschiedenen Induktionsspulenlängen verwendet werden, wodurch Standard-Induktionsspulenlängen in Abhängigkeit von mehreren Werten der Ringlänge definiert werden.

5. Maschine nach einem der Ansprüche 1 bis 4, wobei die Ringe (1) mit einem geeigneten Magnetverschiebewinkel (α) verschoben sind, um die Erzeugung eines Neigungseffekts der Magnete zu erlauben, wodurch ein Rastmoment des Motors reduziert oder beseitigt wird.

6. Maschine nach einem der Ansprüche 1 bis 5, wobei die Magnete (2) in Form von Platten von 10 bis 100 cm² ausgebildet sind, die bevorzugt gemäß dem Innenradius des Läufers (7) gekrümmt sind.

7. Rotor für eine Maschine nach einem der Ansprüche 1 bis 6, wobei die Induktionsspule ein Rotor ist, der mindestens zwei Ringe (1) mit Dauermagneten (2) aufweist, die an ihren Arbeitsflächen befestigt sind, zur Anwendung in Aufzugs- oder Liftanlagen,
wobei die Ringe (1) abnehmbar an einem Rotorrahmen (3) montiert sind oder einen abnehmbaren Teil eines Rotorrahmens (3) bilden,
wobei die Ringe (1) seitlich durch Befestigungsmittel (4) aneinander befestigt sind, um eine Rotoreinheit zu erhalten, und
wobei die Maschine bevorzugt ein Synchronmotor ist.

8. Verfahren zum Demontieren der Induktionsspule oder des Rotors einer elektrischen Maschine mit Dauermagneten, die einen Läufer (7) und eine Induktionsspule oder einen Rotor (1, 2) umfasst, die Ringe (1) mit daran befestigten Dauermagneten (2) nach einem der vorangehenden Ansprüche umfassen, wobei das Verfahren die folgenden Schritte umfasst:
Entfernen der Ringe (1) einzeln und nacheinander, indem Gewindezuganker (5) in jeweilige axiale Löcher (6), die an Kreisrändern der Ringe (1) angeordnet sind, eingesetzt werden, und Entfernen des Rahmens (3) der Induktionsspule oder des Rotors, sobald sich die Ringe (1) draußen befinden.

## Revendications

1. Machine électrique à aimants permanents, comprenant un induit (7) et un inducteur (1, 2),
lequel inducteur comprend au moins deux anneaux (1) sur les surfaces extérieures desquels sont fixés des aimants permanents (2),
lesquels anneaux (1) sont montés amovibles axialement à côté les uns des autres sur une carcasse d'inducteur (3) ou constituent une partie amovible de celle-ci, et
les côtés intérieurs desquels anneaux (1) comportent au moins une encoche (4) servant à aligner et à fixer les anneaux (1) sur la carcasse d'inducteur (3) afin d'obtenir une unité d'inducteur,
**caractérisée en ce qu'**au moins deux anneaux à aimants (1) sont pourvus de trous axiaux (6) sur leurs rebords circulaires permettant, lors d'un démontage, de retirer successivement les anneaux (1) au moyen d'attaches filetées (5) correspondantes susceptibles d'être introduites dans lesdits trous (6).

2. Machine selon la revendication 1, dans laquelle lesdits anneaux (1) sont montés sur ladite carcasse d'inducteur (3) de manière à fixer le côté intérieur des anneaux (1) sur le côté extérieur de la carcasse d'inducteur (3), et dans laquelle lesdits aimants sont fixés sur la surface extérieure des anneaux.

3. Machine selon la revendication 1 ou 2, dans laquelle le côté intérieur de chaque anneau (1) comporte au moins une encoche (4) qui sert à fixer les anneaux sur la carcasse d'inducteur (3) au moyen d'éléments de fixation ou de verrouillage.

4. Machine selon l'une des revendications 1 à 3, dans laquelle des anneaux identiques ou similaires sont utilisés pour des moteurs à inducteur de longueurs différentes, en définissant des longueurs d'inducteur standards en fonction de valeurs multiples de la longueur des anneaux.

5. Machine selon l'une des revendications 1 à 4, dans laquelle les anneaux (1) sont décalés d'un angle de décalage des aimants (α) adapté pour permettre la production d'un effet de biais des aimants qui réduit voire élimine un couple de crantage du moteur.

6. Machine selon l'une des revendications 1 à 5, dans laquelle les aimants (2) sont usinés sous forme de plaquettes de 10 à 100 cm², de préférence incurvées conformément au rayon intérieur de l'induit (7).

7. Rotor pour une machine selon l'une des revendications 1 à 6, dans lequel ledit inducteur est un rotor comportant au moins deux anneaux (1) sur les surfaces de travail desquels sont fixés des aimants permanents (2), pour des applications dans des installations d'ascenseurs ou de systèmes de levage,
lesquels anneaux (1) sont montés amovibles sur une carcasse de rotor (3) ou constituent une partie amovible de celle-ci,
lesquels anneaux (1) sont assujettis latéralement ensemble par des moyens d'assujettissement (4) afin d'obtenir une unité de rotor, et
laquelle machine est de préférence un moteur synchrone.

8. Procédé pour démonter l'inducteur ou le rotor d'une machine électrique à aimants permanents, comprenant un induit (7) et un inducteur ou rotor (1, 2) comportant des anneaux (1) sur lesquels sont fixés des aimants permanents (2) selon l'une quelconque des revendications précédentes, le procédé comprenant les étapes consistant à :
déposer les anneaux (1) successivement un à la fois en introduisant des attaches filetées (5) dans des trous axiaux (6) respectifs pratiqués sur les rebords circulaires des anneaux (1), et
déposer la carcasse (3) de l'inducteur ou du rotor, une fois les anneaux (1) à l'extérieur.
